Europäisches Patentamt

European Patent Office

Office européen des brevets

(19)

(11) Veröffentlichungsnummer: **0 289 637**
**B1**

(12) # EUROPÄISCHE PATENTSCHRIFT

(45) Veröffentlichungstag der Patentschrift:
**13.12.89**

(21) Anmeldenummer: **87106612.2**

(22) Anmeldetag: **07.05.87**

(51) Int. Cl.⁴: **B60P 7/08**

(54) Klemmkopf zum Befestigen eines Raumteilers an einer Bordwand eines Transportfahrzeugs.

(43) Veröffentlichungstag der Anmeldung:
**09.11.88 Patentblatt 88/45**

(45) Bekanntmachung des Hinweises auf die Patenterteilung:
**13.12.89 Patentblatt 89/50**

(84) Benannte Vertragsstaaten:
**AT BE CH DE ES FR IT LI NL**

(56) Entgegenhaltungen:
**US-A- 2 988 020**
**US-A- 3 110 506**
**US-A- 3 212 459**
**US-A- 3 411 459**

(73) Patentinhaber: **F. HESTERBERG & SÖHNE GmbH & Co. KG, Heilenbecker Strasse 50-60,**
**D-5828 Ennepetal 1(DE)**

(72) Erfinder: **Nieland, Friedhelm, Bonkampstr. 40,**
**D-5805 Breckerfeld(DE)**

(74) Vertreter: **Kneissl, Richard, Dr. et al, Patentanwälte Andrae, Flach, Haug, Kneissl Steinstrasse 44,**
**D-8000 München 80(DE)**

## Beschreibung

Die Erfindung betrifft einen Klemmkopf zum Befestigen eines Raumteilers an einer Bordwand eines Transportfahrzeugs, bestehend aus einem Hakenteil, das die Bordwand von oben umgreift, und einem Anlageteil mit einem Klemmstück, wobei das Hakenteil und das Klemmstück einander gegenüberliegende Klemmflächen aufweisen, die mittels eines am Anlageteil angelenkten schwenkbaren Handhebels an einander gegenüberliegenden Oberflächen der Bordwand in Anlage bringbar sind.

Klemmköpfe der vorstehend genannten Art sind aus der DE-A 25 10 493 und der DE-A 34 22 970 bekannt. Bei der in der ersteren Schrift angegebenen Ausführungsform wird das Hakenteil auf der Oberseite des Anlageteils in einem Schlitten linearen geführt. Bei der Ausführungsform der letzteren Schrift werden die beweglichen Teile, entweder das Klemmstück oder das Hakenteil, ebenfalls linear geführt. Bei der Ausführungsform mit beweglichem Hakenteil erfolgt die Führung mittels Langlöchern, während bei der Ausführungsform mit beweglichem Klemmstück letzteres einen Stab aufweist, der in einer Bohrung geführt ist.

Nachteilig an beiden Ausführungsformen ist, daß sie Gleitführungen besitzen, die bei der Herstellung ein hohes Maß an Präzision erfordern, die aber trotzdem während des Gebrauchs einem starken Verschleiß unterliegen.

Der Erfindung lag die Aufgabe zugrunde, einen Klemmkopf der eingangs näher bezeichneten Art so weiterzubilden, daß er nur schwenkbare Teile aufweist, wodurch die vorstehend genannten Nachteile vermieden werden.

Die Aufgabe wird gemäß der Erfindung dadurch gelöst, daß bei einem Klemmkopf der eingangs beschriebenen Art das Hakenteil in bezug auf das Anlageteil festliegt und daß das Klemmstück am Anlageteil schwenkbar gelagert und mit einem einerseits am Anlageteil und andererseits am Klemmstück angelenkten Kniehebel, dessen eines Kniehebelglied in den Handhebel übergeht, betätigbar ist, wobei in der Schließstellung das Knie des Kniehebels sich in einer Übertotpunktlage befindet und an einem Anschlag anliegt.

Der erfindungsgemäße Klemmkopf unterliegt keiner wesentlichen Abnutzung, weil sämtliche beweglichen Teile um Achsen schwenken und linear geführte Teile völlig fehlen.

Bei einer bevorzugten Ausführungsform ist die Klemmfläche des Klemmstücks gegenüber diesem federnd abgestützt, wodurch der Andruck des Klemmstücks zuverlässiger erfolgt. Dies kann dadurch erreicht werden, daß auf der Klemmfläche des Klemmstücks ein Kissen aus einem elastischen Material, wie z. B. Gummi, angeordnet ist. Dabei kann gegebenenfalls auch auf der Klemmfläche des Hakenteils ein solches Kissen aus elastischem Material vorgesehen sein.

Bei einer weiteren bevorzugten Ausführungsform ist das Klemmstück auf seiner Schwenkachse mit einem horizontal verlaufenden Langloch gelagert. Das Klemmstück liegt ohne ein solches Langloch nur dann mit seiner Klemmfläche sauber an der Bordwand an, wenn der Abstand zwischen den Klemmflächen am Klemmstück einerseits und am Hakenteil andererseits genau eingestellt ist. Durch die Lagerung mit einem Langloch wird dagegen erreicht, daß auch bei einer ungenauen Einstellung dieses Abstands oder aber bei einer Bordwand, deren einander gegenüberliegende Flächen nicht parallel zueinander verlaufen, die Klemmfläche des Klemmstücks gleichmäßig an die Bordwand angedrückt wird.

Damit der Klemmkopf an verschiedene Bordwandstärken angepaßt werden kann, ist bei einer bevorzugten Auführungsform das Hakenteil gegenüber dem Anlageteil derart verstellbar, daß der Abstand zwischen den Klemmflächen veränderbar ist. Eine besonders einfache Ausbildung besteht darin, daß das Hakenteil in das Anlageteil einschraubbar ist.

Bei einer anderen bevorzugten Ausführungsform ist die Klemmfläche des Hakenteils breiter als diejenige des Klemmstücks. Wenn beispielsweise Ladung seitlich gegen den Raumteiler drückt, dann wird sich dieser in einem gewissen Ausmaß durchbiegen, wodurch der Klemmkopf nicht mehr genau senkrecht von der Bordwand absteht. Der effektive Abstand der Klemmflächen wird dadurch verkleinert, wodurch die Klemmwirkung gesteigert wird. Diese Klemmwirkung ist noch höher, wenn die Klemmfläche des Hakenteils breiter gemacht wird.

Für ein bequemes Aufsetzen des erfindungsgemäßen Klemmkopfs auf eine Bordwand ist es nützlich, wenn der Handhebel in der Offenstellung festgehalten wird. Um dies zu erreichen, ist bei einer Weiterbildung des erfindungsgemäßen Klemmkopfs zwischen dem Anlageteil und einem der beweglichen Teile des Klemmechanismus eine Zugfeder gespannt, welche den geöffneten Handhebel in dieser Stellung hält. Die Zugfeder greift vorzugsweise an der Verbindungsachse zwischen dem Kniehebel und dem Klemmstück an. Der Vorteil dieser Ausbildung liegt darin, daß die Zugfeder nicht nur den geöffneten Handhebel festhält, sondern daß sie bei geschlossener Stellung des Klemmechanismus diese Stellung noch unterstützt.

Der Klemmkopf ist üblicherweise verhältnismäßig schmal ausgebildet, so daß er in das Ende eines aus einem Hohlprofil mit rechteckigem Querschnitt bestehenden Raumteiler eingeschoben und darin befestigt werden kann. Hierzu sind üblicherweise am Klemmkopf Bohrungen vorgesehen, durch welche Nieten oder Bolzen zur Befestigung am Hohlprofil hindurchgeführt werden können.

Damit der erfindungsgemäße Klemmkopf aber auch zusammen mit Gurten verwendet werden kann, ist an dem dem Hakenteil gegenüberliegenden Ende des Anlageteils in den einander gegenüberliegenden Flächen und/oder in der rückwärtigen Stirnfläche je eine längliche Ausnehmung vorgesehen. Zur Befestigung eines Gurts kann ein Ende desselben durch die einander gegenüberliegenden länglichen Ausnehmungen hindurchgeführt und an einem rückwärtigen Stück des Gurts befestigt, beispielsweise angenäht, werden. Es ist aber auch möglich, das Ende des Gurts mit einem Schloß zu versehen, das in eine der länglichen Ausnehmungen eingehängt werden kann. Natürlich ist es auch möglich, gleichzeitig mehrere Gurten an den länglichen Ausnehmungen zu befestigen.

Die Erfindung wird nun anhand der beigefügten Zeichnungen näher erläutert.

In den Zeichnungen zeigen:

Figur 1 einen Längsschnitt durch einen erfindungsgemäßen Klemmkopf;

Figur 2 eine Stirnansicht des Hakenteils von Figur 1;

Figur 3 die Befestigung eines Gurts am Klemmkopf von Figur 1;

Figur 4 einen Schnitt durch Figur 3 an einer Höhe, die in Figur 1 mit strichpunktierter Linie A dargestellt ist;

Figur 5 eine Befestigung eines Gurts am Klemmkopf mit einem Klemmschloß; und

Figur 6 einen Schnitt durch Figur 5 an einer Höhe, die in Figur 1 mit strichpunktierter Linie A dargestellt ist.

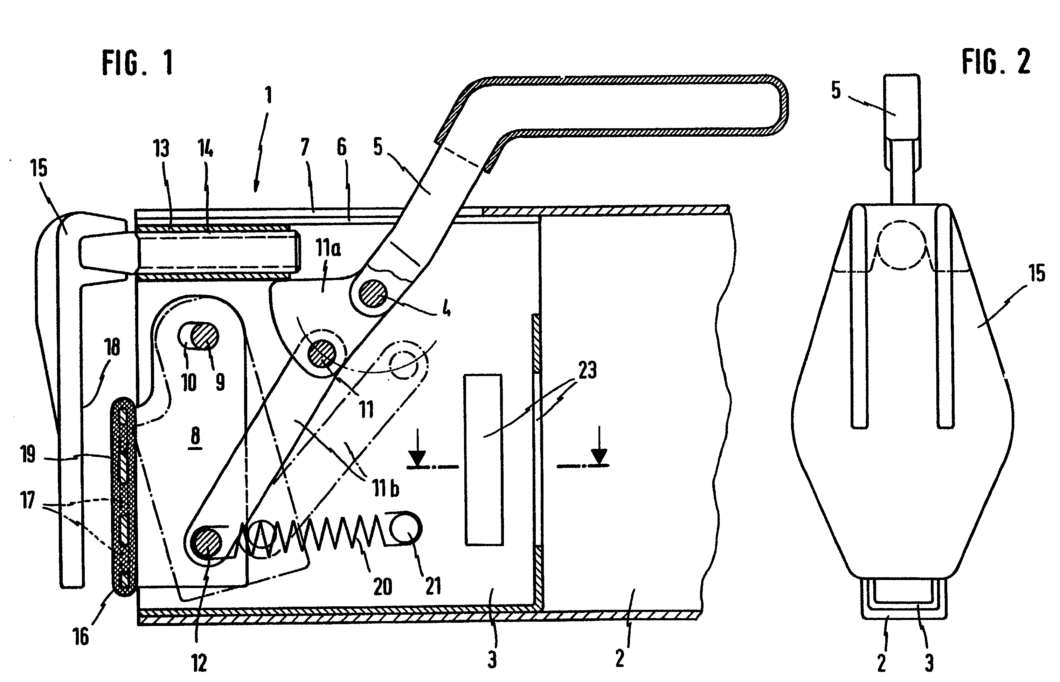

Figur 1 zeigt einen erfindungsgemäßen Klemmkopf 1, der auf einer Bordwand festgeklemmt werden kann und in einem Raumteiler 2 angeordnet ist, der aus einem Aluminiumhohlprofil mit rechteckigem Querschnitt besteht. Der Klemmkopf 1 besitzt ein kastenförmiges Anlageteil 3, in welchem mittels einer Achse 4 ein Handhebel 5 gelagert ist, welcher in seinem unteren Bereich gabelförmig ausgebildet ist. Der Handhebel 5 geht durch einen Schlitz 6 in der Oberseite des Anlageteils 3 hindurch. Entsprechend besitzt der Raumteiler 2 in diesem Bereich eine Ausnehmung 7. Ein Klemmstück 8 ist mittels einer Achse 9 im Anlageteil 3 schwenkbar gelagert, wobei die Achse 9 durch ein Langloch 10 im Klemmstück 8 hindurchgeht. Das Klemmstück 8 ist U-förmig ausgebildet, derart, daß der Verbindungssteg das "U" in der Schließstellung aus dem Anlageteil 3 vorragt. Am inneren Ende geht der Handhebel 5 in ein Kniehebelglied 11a über, das zusammen mit einem Kniehebelglied 11b einen Kniehebel bildet. Die Kniehebelglieder 11a und 11b sind mittels einer Knieachse 11 miteinander verbunden. Die andere Seite des Kniehebelglieds 11b ist mittels einer Achse 12 am Klemmstück angelenkt. In die Oberseite des Anlagestücks ist ein Block 13 mit einer Gewindebohrung 14 eingeschweißt, in die ein Hakenteil 15 eingeschraubt ist. Der Block 13 dient gleichzeitig als Anschlag für das Knie des Kniehebels 11a, 11b. Das Klemmstück 8 ist an dem Teil, der aus dem Anlageteil 3 vorragt, mit einem Kunststoffkissen 16 ummantelt, das zur besseren Festhaltung durch Bohrungen 17 des Klemmstücks 8 hindurchragt. In der Schließstellung ist die Bordwand zwischen Klemmflächen 18 und 19 am Hakenteil 15 bzw. am Klemmstück 8 eingeklemmt. Eine Zugfeder 20 ist zwischen der Achse 12 und einem Bolzen 21 gespannt. Der Klemmkopf 1 wird im Raumteiler 2 durch nicht dargestellte Schrauben festgehalten.

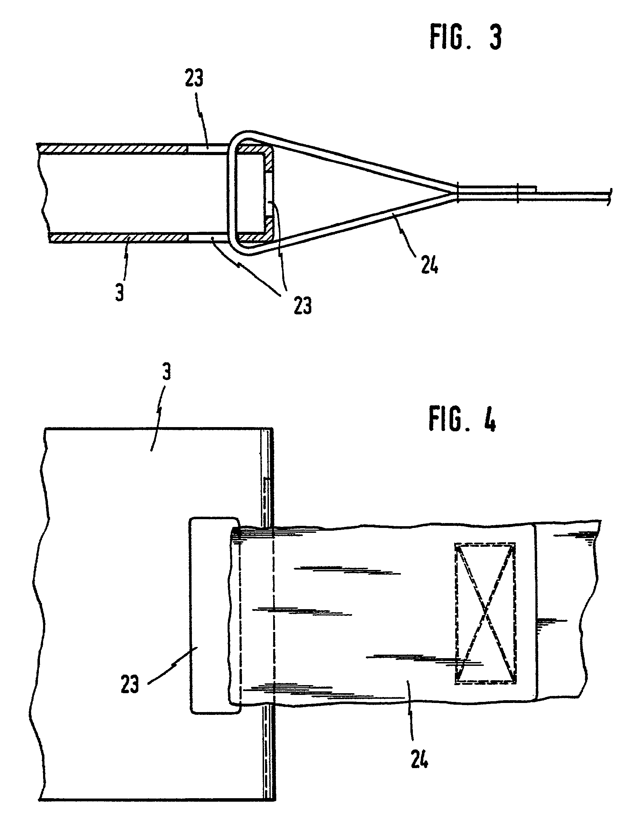

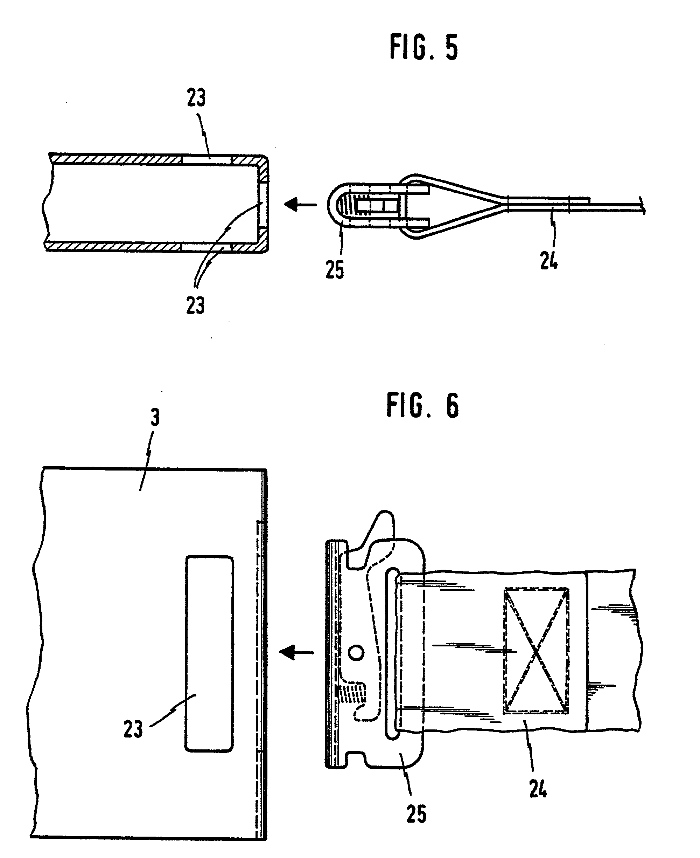

Gemäß den Figuren 3 bis 6 besitzt das Anlageteil 3 auf seiner Rückseite längliche Schlitze 23, die dazu dienen, einen Gurt 24, der einen Raumteiler bildet, entweder direkt oder mittels eines Gurtschlosses 25 zu befestigen.

## Patentansprüche

1. Klemmkopf (1) zum Befestigen eines Raumteilers (2, 24) an einer Bordwand eines Transportfahrzeugs, bestehend aus einem Hakenteil (15), das die Bordwand von oben umgreift, und einem Anlageteil (3) mit einem Klemmstück (8), wobei das Hakenteil (15) und das Klemmstück (8) einander gegenüberliegende Klemmflächen (18, 19) aufweisen, die mittels eines am Anlageteil (3) angelenkten schwenkbaren Handhebels (5) an einander gegenüberliegenden Oberflächen der Bordwand in Anlage bringbar sind, dadurch gekennzeichnet, daß das Hakenteil (15) in bezug auf das Anlageteil (3) festliegt und daß das Klemmstück (8) am Anlageteil (3) schwenkbar gelagert und mit einem einerseits am Anlageteil (3) und andererseits am Klemmstück (8) angelenkten Kniehebel (11a, 11b), dessen eines Kniehebelglied (11a) in den Handhebel (5) übergeht, betätigbar ist, wobei in der Schließstellung das Knie des Kniehebels (11a, 11b) sich in einer Übertotpunktlage befindet und an einem Anschlag (13) anliegt.

2. Klemmkopf nach Anspruch 1, dadurch gekennzeichnet, daß die Klemmfläche (19) des Klemmstücks (8) gegenüber diesem federnd abgestützt ist.

3. Klemmkopf nach Anspruch 2, dadurch gekennzeichnet, daß auf der Klemmfläche (19) des Klemmstücks (8) ein Kissen (16) aus einem elastischen Material angeordnet ist.

4. Klemmkopf nach einem der vorhergehenden Ansprüche, dadurch gekennzeichnet, daß das Klemmstück (8) auf seiner Schwenkachse (9) mit einem horizontal verlaufenden Langloch (10) gelagert ist.

5. Klemmkopf nach einem der vorhergehenden Ansprüche, dadurch gekennzeichnet, daß das Hakenteil (15) gegenüber dem Anlageteil (3) derart verstellbar ist, daß der Abstand zwischen den Klemmflächen (18, 19) veränderbar ist.

6. Klemmkopf nach Anspruch 5, dadurch gekennzeichnet, daß das Hakenteil (15) in das Anlageteil (3) einschraubbar ist.

7. Klemmkopf nach einem der vorhergehenden Ansprüche, dadurch gekennzeichnet, daß die Klemmfläche (18) des Hakenteils (15) breiter ist als die Klemmfläche (19) des Klemmstücks (8).

8. Klemmkopf nach einem der vorhergehenden Ansprüche, dadurch gekennzeichnet, daß zwischen dem Anlageteil (3) und einem der beweglichen Teile (8, 11a, 11b) des Klemmmechanismus eine Zugfeder (20) gespannt ist, welche den geöffneten Handhebel (5) in dieser Stellung hält.

9. Klemmkopf nach Anspruch 8, dadurch gekennzeichnet, daß die Zugfeder (20) an der Verbindungsachse (12) zwischen dem Kniehebel (11a, 11b) und dem Klemmstück (8) angreift.

10. Klemmkopf nach einem der vorhergehenden Ansprüche, dadurch gekennzeichnet, daß an dem dem Hakenteil (15) gegenüberliegenden Ende des Anlageteils (3) in den einander gegenüberliegenden Flächen und/oder in der rückwärtigen Stirnfläche längliche Ausnehmungen (23) zur Befestigung eines Gurts (24) vorgesehen sind.

## Claims

1. Clamp head (1) for securing a bracing bar (2, 24) to a side panel of a transport vehicle consisting of a hook member (15) engaging over the side panel from above, and an engagement member (3) having a clamp piece (8), the hook member (15) and the clamp piece (8) having oppositely disposed clamping faces (18, 19) which are adapted to be brought into engagement at oppositely disposed surfaces of the side panel by means of a hand lever (5) pivotally mounted on the engagement member (3), characterized in that the hook member (15) is fixed with respect to the engagement member (3) and that the clamp piece (8) is pivotally mounted on the engagement member (3) and is actuable with a toggle lever (11a, 11b) which is articulately connected on the one hand to the engagement member (3) and on the other to the clamp piece (8) and the one toggle lever element (11a) merges into the hand lever (5), the elbow of the toggle lever (11a, 11b) being located in an overdeadcentre position and bearing on a stop (13) in the closure position.

2. Clamp head according to claim 1, characterized in that the clamping face (19) of the clamp piece (8) is resiliently supported with respect thereto.

3. Clamp head according to claim 2, characterized in that on the clamping face (19) of the clamp piece (8) a pad (16) of a resilient material is disposed.

4. Clamp head according to any one of the preceding claims, characterized in that the clamp piece (8) is mounted on its pivot pin (9) with a horizontally extending slot (10).

5. Clamp head according to any one of the preceding claims, characterized in that the hook member (15) is adjustable with respect to the engagement member (3) in such a manner that the spacing between the clamping faces (18, 19) is variable.

6. Clamp head according to claim 5, characterized in that the hook member (15) is adapted to be screwed into the engagement member (3).

7. Clamp head according to any one of the preceding claims, characterized in that the clamping face (18) of the hook member (15) is wider than the clamping face (19) of the clamp piece (8).

8. Clamp head according to any one of the preceding claims, characterized in that between the engagement member (3) and one of the moving parts (8, 11a, 11b) of the clamping mechanism a tension spring (20) is tensioned which holds the opened hand lever (5) in this position.

9. Clamp head according to claim 8, characterized in that the tension spring (20) engages on the connecting pin (12) between the toggle lever (11a, 11b) and the clamp piece (8).

10. Clamp head according to any one of the preceding claims, characterized in that at the end of the engagement member (3) opposite the hook member (15) in the opposing faces and/ or in the rear end face elongated recesses (23) are provided for securing a strap (24).

## Revendications

1. Tête (1) de serrage, destinée à fixer une cloison séparatrice (2, 24) à une ridelle d'un véhicule de transport, et composée d'une pièce en crochet (15), qui prend la ridelle par-dessus, et d'un élément de support (3) à organe de blocage (8), cette pièce en crochet (15) et cet organe de blocage (8) présentant des surfaces de serrage (18, 19) qui se font vis-à-vis et qui peuvent être amenées à s'appliquer contre les faces ou côtés opposés de la ridelle au moyen d'un levier (5) à bras articulé sur l'élément de support (3), tête caractérisée en ce que la pièce en crochet (15) est fixe par rapport à l'élément de support (3) et en ce que l'organe de blocage (8) est articulé sur cet élément de support (3) et peut être manoeuvré par un levier (11a, 11b) à genouillère, dont l'un (11a) des éléments est prolongé par le levier (5) à bras et qui est articulé, d'une part sur ledit élément de support (3) et, d'autre part sur cet organe de blocage (8), le coude de ce levier (11a, 11b) se trouvant, dans la position de fermeture, au-delà d'une position de point mort et étant appliqué contre une butée (13).

2. Tête de serrage selon la revendication 1, caractérisée en ce que la surface de serrage (19) de l'organe de blocage (8) est appliquée élastiquement par rapport à celui-ci.

3. Tête de serrage selon la revendication 2, caractérisée en ce qu'un coussinet (16) en une matière élastique est disposé sur la surface de serrage (19) de l'organe de blocage (8).

4. Tête de serrage selon l'une des revendications précédentes, caractérisé en ce que l'organe de blocage (8) est monté sur son axe (9) de pivotement au moyen d'une boutonnière (10) horizontale.

5. Tête de serrage selon l'une des revendications précédentes, caractérisée en ce que la pièce en crochet (15) peut être déplacée par rapport à l'élément de support (3) de façon à permettre de modifier l'écart entre leurs surfaces de serrage (18, 19).

6. Tête de serrage selon la revendication 5, caractérisée en ce que la pièce en crochet (15) peut être vissée dans l'élément de support (3).

7. Tête de serrage selon l'une des revendications précédentes, caractérisée en ce que la surface de serrage (18) de la pièce en crochet (15) est plus large que la surface de serrage (19) de l'organe de blocage (8).

8. Tête de serrage selon l'une des revendications précédentes, caractérisée en ce qu'un ressort (20) de traction, qui maintient le levier (5) à bras dans sa position quand celui-ci est ouvert, est bandé entre l'élément de support (3) et l'un des éléments mobiles (8, 11a, 11b) du mécanisme de serrage.

9. Tête de serrage selon la revendication 8, caractérisée en ce que le ressort (20) de traction agit sur l'axe (12) qui relie le levier (11a, 11b) à genouillère et l'organe de blocage (8).

10. Tête de serrage selon l'une des revendications précédentes, caractérisée en ce que, à l'extrémité de l'élément de support (3) opposée à la pièce en crochet (15), des évidements (23) oblongs destinés à la fixation d'une sangle (24), sont formés dans les faces qui se font vis-à-vis et/ou dans sa
paroi transversale postérieure.

FIG. 2

FIG. 1

## FIG. 3

## FIG. 4

# FIG. 5

# FIG. 6